Europäisches Patentamt

European Patent Office

Office européen des brevets

(19)

(11) EP 0 790 027 B1

(12) EUROPEAN PATENT SPECIFICATION

(45) Date of publication and mention
of the grant of the patent:
07.05.2003 Bulletin 2003/19

(51) Int Cl.⁷: **A47J 41/00**

(21) Application number: 96102249.8

(22) Date of filing: 15.02.1996

(54) **Electric heat insulating pot**

Wärmeisolierter elektrischer Kochtopf

Bouilloire électrique à isolation thermique

(84) Designated Contracting States:
**AT BE DE DK ES FR GB IT NL SE**

(43) Date of publication of application:
**20.08.1997 Bulletin 1997/34**

(73) Proprietor: **NIPRO CORPORATION**
**Osaka-shi Osaka 531 (JP)**

(72) Inventors:
• **Sano, Minoru**
**Kyoto-shi, Kyoto 605 (JP)**
• **Kuwabara, Hideo**
**Kohga-gun, Shiga 520-32 (JP)**
• **Tomita, Hideyuki**
**Ohtsu-shi, Shiga 520 (JP)**
• **Nakagawa, Hiroyuki**
**Ohtsu-shi, Shiga 520 (JP)**

(74) Representative: **Dallmeyer, Georg, Dipl.-Ing. et al**
**Patentanwälte**
**Von Kreisler-Selting-Werner**
**Bahnhofsvorplatz 1 (Deichmannhaus)**
**50667 Köln (DE)**

(56) References cited:
**DE-A- 2 343 940        FR-A- 843 061**
**FR-A- 940 242          FR-A- 2 709 951**

• **PATENT ABSTRACTS OF JAPAN vol. 14, no. 546**
**(E-1008), 4 December 1990 & JP-A-02 234377**
**(CANON INC), 17 September 1990,**

**Description**

The present invention relates to an electric heat insulating pot. More particularly, the present invention relates to an electric heat insulating pot as defined in the pre-characterising portion of claim 1 which is capable of retaining the content of the pot, such as hot water, at a desired high temperature with small electric power.

There have been conventionally known electric pots for exclusively insulating heat, or both boiling water and insulating heat. For example, JP-A-62109517 discloses an electric heat insulating pot having a container comprising metal inner and outer containers having a vacuum space therebetween (hereinafter the container is referred to as vacuum double container, or more simply, container), wherein a lid part including a bellows type air pump is installed on said vacuum double container and a heater is installed in the bottom part thereof.

The vacuum double container in said electric heat insulating pot is composed of a metal such as stainless, which is, on the one hand, advantageous in that water can be heated in a short time due to the high thermal conductivity peculiar to metals, but on the other hand, disadvantageous in that hot water can cool in a short time due to the high thermal conductivity. To overcome this defect, conventional electric heat insulating pots employ a heater of about 1,000 W for retaining the hot water in the container at a desired temperature. Such high output heater has high heat generation and easily boils a small amount of hot water which may be present in the container, resulting in possible heating of an empty pot.

When supply of power from a battery is desired, a high output heater consumes greater power and imposes too great a load on the battery. As a result, it has been almost impossible to use a battery as a power source of an electric heat insulating pot. Consequently, the place where an electric heat insulating pot equipped with a high output heater can be used, is confined to the inside of a house where electric power can be supplied from the outside, and the portable use thereof has been unrealizable.

The pre-characterising portion of claim 1 is based on the disclosure of the document DE-A-23 43 940 which relates to a removable screw cap adapted for use with a thermally insulated bottle, said bottle comprising a cylindrical metal housing and a double-walled container having spaced, concentric inner and outer tubular shells formed of glass. A lamp is used as a heating means entirely housed within the screw cap. Accordingly the lamp is only able to heat the chamber defined and enclosed by the cap body allowing to reduce heat losses of the thermally insulated bottle at the upper end.

FR-A-2709951 relates to a nursing bottle type container comprising a body and lid with a teat, wherein a part of the body is equipped with a heater unit having a low voltage heating coil or a high voltage heating coil in combination with a thermostat. This container does not have a tank 1 consisting of a glass vacuum double walled container or a case to cover the tank 1. In addition, the body does not have a light emitting heater.

FR-A-843 061 relates to a bottle type heat insulating container, in which the body of the container includes a heater unit having a heating coil preferably in combination with a thermostat.

FR-A-940 242 relates to a container for keeping a liquid warm, the body of the container including a heater unit having a low voltage heating coil.

It is the object of the present invention to provide an electric heat insulating pot capable of safely and stably retaining the content of the pot at a desired high temperature with small electric power.

According to the invention, this object is achieved by an electric heat insulating pot of the type defined in the pre-characterising portion of claim 1, said pot further comprising a control means provided for controlling the output of the heater and a water level detector providing a water level signal to said control means for performing control.

Preferred embodiments of the insulating pot according to the invention are subject-matter of the dependent claims 2-8.

The pot of the present invention shows superior heat insulating performance which is attributable to the glass vacuum double container used as the tank, such that the pot of the present invention shows noticeably small temperature fall even immediately after filling the tank with hot water when the fall should be most steep, as compared to metal vacuum double containers. Such small temperature fall has enabled keeping the hot water at a desired temperature with a small power heater. As the small power heater, a light emitting heater such as a lamp is most suitable, which also permits observation of the inside of the tank by the illumination it provides. The small power needed by the heater has enabled power supply from a battery, particularly a secondary battery, as a result of which the pot can be used outside a house as well upon setting a battery as a power source.

BRIEF DESCRIPTION OF THE DRAWINGS

Fig. 1 is a cross section of the electric heat insulating pot according to an embodiment of the present invention.
Figs. 2 and 3 are respectively cross sectional views which explain different embodiments of the electric heat insulating pot of the present invention.
Fig. 4 is a comparative showing of the temperature fall with the course of time of the hot water stored in the electric heat insulating pot of the present invention and a conventional metallic electric heat insulating pot.

Fig. 5 shows a change with time of the temperature of the hot water in the pot when constant power was supplied to the electric heat insulating pot of the present invention.

DETAILED DESCRIPTION OF THE INVENTION

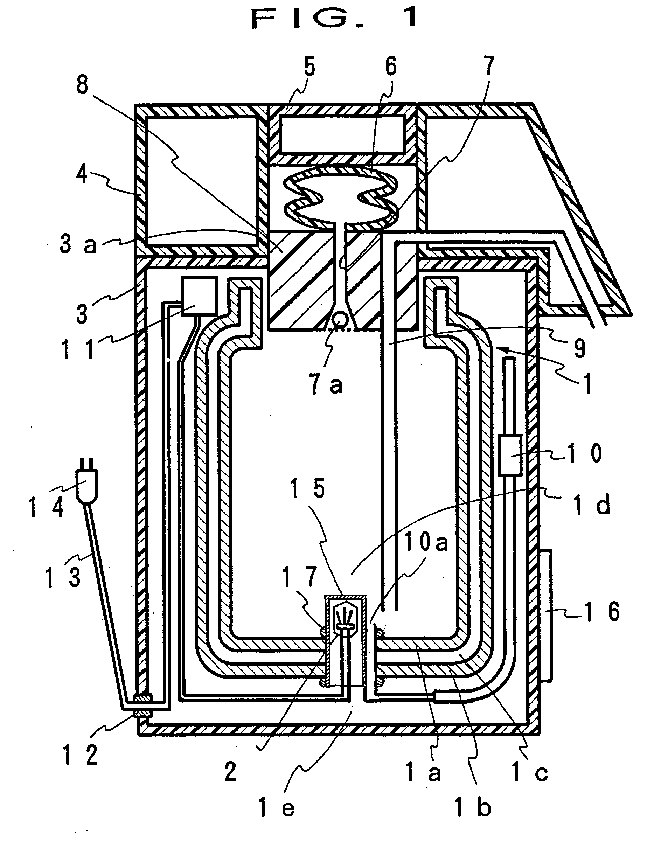

In Fig. 1, a tank 1 of a glass vacuum double container and a small power heater 2 are housed in a case 3, and an upper opening 3a of the case 3 is closed by a lid 4. As the lid 4, a conventionally used lid for an air pump pot is employed, which comprises a push button 5 for operation, an air pump 6, a seal 8 comprising an air intake path 7 having a check valve 7a, and a lead-through tube 9.

The tank 1 is formed from a glass material such as boro-silicated glass, such that an inner container 1a and an outer container 1b are connected at the respective opening edges to form a double container, with the surface thereof plated with a metal. Examples of the metal material for plating include conventional ones such as gold, silver, aluminum and titanium. A closed space 1c between the inner container 1a and the outer container 1b is retained at a vacuum of about $1.3 \cdot 10^{-1}$ - $1.3 \cdot 10^{-2}$Pa ($10^{-3}$ - $10^{-4}$ mmHg).

With regard to this pot, a bottom opening 1e is formed at the bottom part in the tank 1 for the communication of a reservoir 1d in the tank 1 and the outside of the tank 1. The opening edges of the inner container 1a and the outer container 1b are connected around the bottom opening 1e. A protection cover 15 which protects the heater part 2 is fit into the bottom opening 1e and the protection cover 15 is airtightly sealed at the bottom opening 1e against the tank 1 with a sealant 17. The illumination afforded by the light emitting heater in the heater part 2 housed inside the protection cover 15 made from a translucent material such as glass permits observation of the reservoir 1d in the tank 1 through the protection cover 15. The material of the protection cover 15 is not limited to glass and may be a metallic material such as stainless and aluminum. The material of the sealant 17 includes, for example, silicone rubber, fluorine rubber, ethylene propylene rubber, etc. Alternatively, sealing of the space 1c by direct bonding or metal sealing with glass of the inner container 1a, outer container 1b and protection cover 15 can be employed instead of the use of the sealant 17.

The heater part 2 comprises a light emitting heater and a temperature measuring device integrally formed, with a part of the protection cover 15 protruding into the reservoir 1d in the tank 1. Electric power is supplied to the heater part 2 from the outside via a control substrate 11, a power source connector 12, an electric line 13 and an electric plug 14. As the light emitting heater, for example, a small lamp such as pilot lamp to be used for electric equipments, incandescent lamp, halogen lamp or lamp containing a rare gas (e.g., argon, krypton and xenon) can be used. The lamp to be used in the present invention is exemplified by incandescent lamps such as incandescent tungsten lamp, and various lamps which produce light using electricity, such as arc lamp, glow lamp, mercury vapor lamp and fluorescent lamp. In Fig. 1, an incandescent tungsten lamp electrically connected directly by a lead-in wire is used as a light emitting heater. The heater may be a lamp having a screw cap or without a cap, in which case the lamp can be easily exchanged.

The heater constituting the heater part 2 in the present invention can be other than the light emitting heaters exemplified above, and a heater which requires relatively small power of generally 1.0 - 20 W, preferably 1.2 - 10 W, and more preferably 1.5 - 5 W is used. The temperature measuring device in the heater part 2 is exemplified by thermister, IC temperature sensor and thermocouple.

A plug 8 to close the upper opening of the tank 1 closes with good airtightness by coming into close contact with the edge of the inner periphery of the upper opening of the tank 1. A water level detector 10 is equipped in the case 3 to detect the level of the hot water stored in the tank 1. Hot water is introduced to the water level detector 10 through an inlet 10a formed with the protection cover 15 to allow detection of the level of the hot water in the tank. The water level detector 10 can also use an electrode method based on the changes of electrostatic capacity or electric resistance between the counter-facing electrodes, which correspond to the varying liquid amount, or a pressure method based on the changes of pressure which correspond to the varying liquid amount.

In the electric heat insulating pot shown in Fig. 1, power is supplied from the outside to the heater part 2 via the electric line 13. The present invention is not limited to the presented mode, and a battery may be equipped inside the case 3 instead of electric line 13 so as to cope with the situation where an electric supply from an outer source is difficult to secure, such as in the outdoor use. An electric heat insulating pot including a battery is free of locational limitation for use, and can be taken outside and used at an optional place. Particularly preferred as the battery is a secondary battery. The secondary battery includes, for example, nickel-cadmium battery, nickel-hydrogen battery and lithium battery. A lithium battery generally has high capacity and a small-sized one is sufficient for use. Accordingly, a lithium battery is particularly suitable for a portable electric heat insulating pot. A lithium battery preferably comprises a lithium transition metal compound as a positive electrode active material and carbon or lithium alloy as a negative electrode active material.

The temperature measured by the temperature measuring device and the water level detected by the water level detector 10 are entered in a control substrate 11. The control substrate 11 controls the output of the heater based on the input data and outputs the information of on-off of the power, temperature and water level on a display 16 such as a liquid crystal display. The control substrate 11 can also prevent heating of an empty pot and control the heater output to prevent overcurrent.

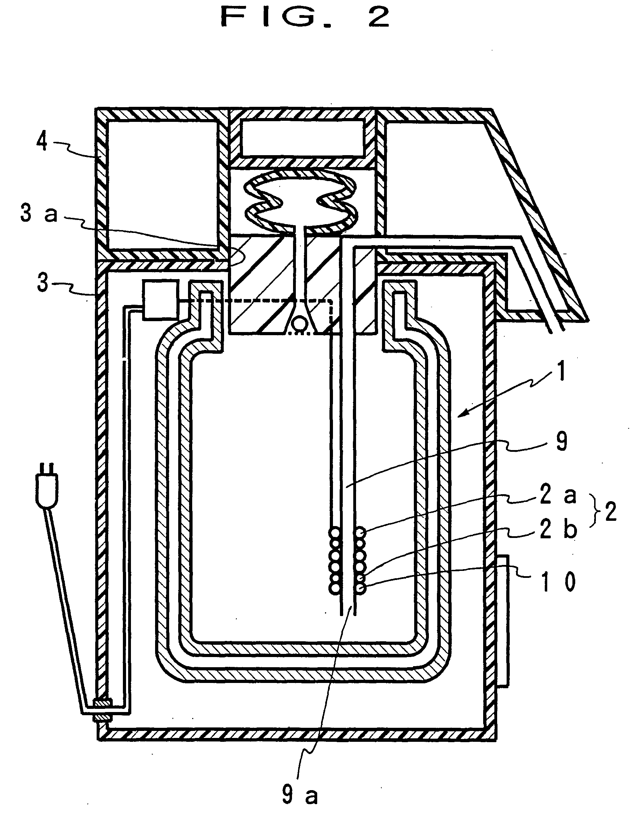

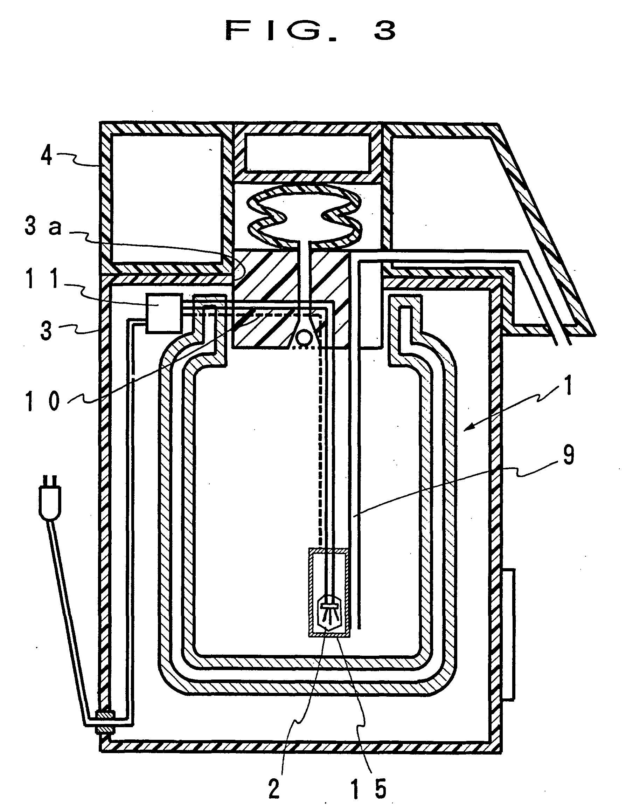

In the different embodiments shown in Figs. 2 and 3, like reference numerals of Fig. 1 are used to represent like parts.

In Fig. 2, a tank 1 of a glass vacuum double container and a ceramic heater part 2 are housed in a case 3, and an opening 3a of the case 3 is closed by a lid 4. The heater part 2 comprises a heater itself 2a and a temperature measuring device 2b. The heater part 2 and a water level detector 10 are mounted on the absorption end 9a of a lead-through tube 9 which is set in the tank 1. Such heater immersion-type electric heat insulating pot can be manufactured using an easily processable single-mouthed glass bottle.

In Fig. 3, a heater part 2 and a water level detector 10 which is equipped at the end portion of a line shown by the dotted line are inserted into the tank from the upper part, the heater part being set at the absorption end of a lead-through tube 9. Said heater part 2 comprises a lamp as a heater. An opening 3a of a case 3 is closed by a lid 4.

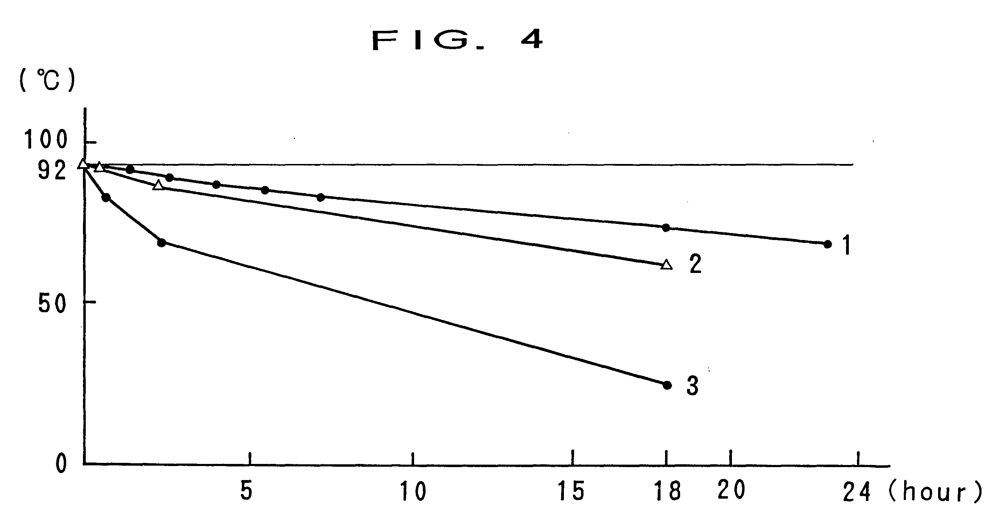

In Fig. 4, a curve 1 shows changes with time of the temperature of hot water in a pot, when 2 $\ell$ of hot water (92°C) was poured into a 2.2 $\ell$ electric heat insulating pot of Fig. 1 and the pot was left standing at room temperature (25°C) without activating the heater. A curve 2 shows changes with time of the temperature of hot water in a pot, when 1.5 $\ell$ of hot water (92°C) was poured into a 1.9 $\ell$ electric heat insulating pot of Fig. 1 and the pot was left standing at room temperature (25°C) without activating the heater. A curve 3 also shows changes with time of the temperature of hot water in a pot as in the case of curve 1 except that a stainless electric heat insulating pot of boiling type was used.

As is evident from Fig. 4, the stainless electric heat insulating pot of boiling type (curve 3) showed a drastic fall of the temperature of hot water as compared with the electric heat insulating pots of the present invention (curve 1 and curve 2) for 2.5 hours after initiation of the test. While the temperature fall shown by curve 3 became somewhat gradual thereafter, the temperature fell still at greater rates than in the case of the pots of the present invention. In contrast, the temperature fall of the hot water stored in the pots of the present invention was gradual.

The electric power W necessary for the heater of the present invention to retain the initial temperature (92°C) of the hot water by activating the heater in the heater part 2 is obtained by the following formula (1):

$$W \text{ (watt)} = \frac{4.1855}{60} \times \frac{\mu(\text{cm}^3) \times \Delta T \text{ (°C)}}{t \text{ (min)}} \qquad (1)$$

wherein t is time (minute) lapsed, $\mu$ is volume (cm$^3$) of hot water charged and $\Delta T$ is temperature (°C) decreased from the initial temperature.

In the present invention, electric power (W) necessary for the heater and volume $\mu$ (cm$^3$) of hot water preferably satisfy the following formula (2) and the volume $\mu$ is preferably from 300 cm$^3$ to 3,500 cm$^3$.

$$1.98 \times 10^{-3} \mu < W < 6.67 \times 10^{-3} \mu \qquad (2)$$

In the electric heat insulating pot ($\mu$=2,000 cm$^3$) of the present invention, the heater part required power of 2.6 W, in view of curve 1 which shows, at 18 hours (t=1,080 min) from the initiation of the test, a temperature fall $\Delta T$ of 20°C from the temperature at the initiation of the test. In the electric heat insulating pot ($\mu$=1,500 cm$^3$), the heater part required power of 3.1 W, in view of curve 2 which shows, at 18 hours (t=1,080 min) from the initiation of the test, a temperature fall $\Delta T$ of 31.5°C from the temperature at the initiation of the test. In contrast, in the stainless boiling electric heat insulating pot ($\mu$=2,000 cm$^3$), the heater part required far greater power of 31 W to compensate the steep temperature fall ($\Delta T$=9°C) at the initial stage (t=40 min) of the test, as shown by curve 3.

It is evident from Fig. 4 that a conventional stainless boiling electric heat insulating pot required greater power to retain constant high temperature, since the hot water cooled drastically at the initial stage of the storage, whereas the electric heat insulating pot of the present invention required power of only about 3 W to keep constant high temperature.

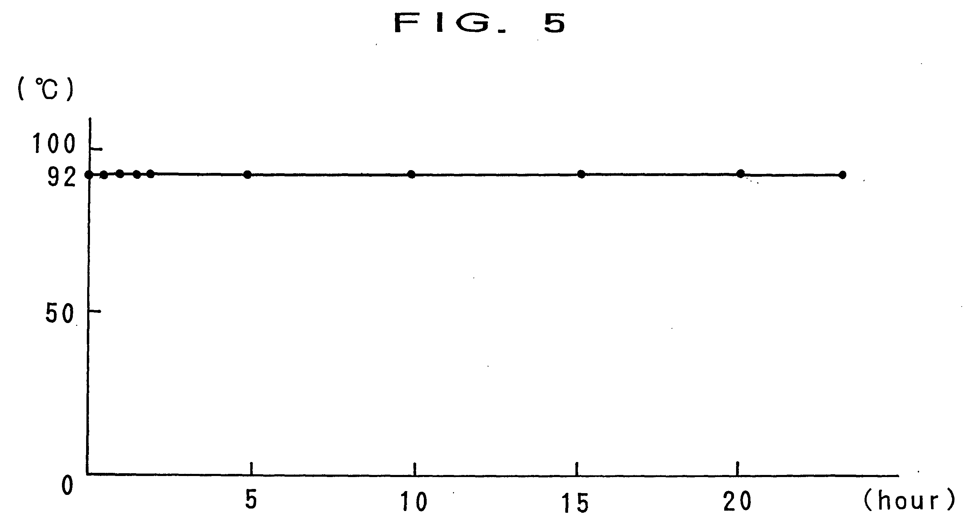

Fig. 5 shows changes of the temperature of hot water in the pot when constant power was supplied to the electric heat insulating pot of the present invention, wherein 2 $\ell$ of hot water (92°C) was stored in a 2.5 $\ell$ electric heat insulating pot of Fig. 1 and the heat of the water was retained by the use of a 3.5 W lamp. As a result, the temperature somewhat rose immediately after the initiation of the test, and the hot water was retained at a constant temperature (92°C) thereafter, as shown in Fig. 5. While the invention has been detailedly described with regard to heat insulation of hot water, the present invention is applicable to, for example, warmth-retaining . lunch.

The electric heat insulating pot of the present invention has superior heat retaining property and is capable of safely retaining hot water with small power using a small power heater. The illuminating action of the lamp heater enables observation of the content stored in the pot, with a further effect being clear indication of its presence by its own illumination even in the sheer darkness.

## Claims

1. An electric heat insulating pot comprising a tank (1) which is a glass vacuum double-walled container (1a,1b) housed in a case (3) which envelops the tank (1), a lid (4) which closes an upper opening (3a) of the case (3), and a small power heater (2) housed in said tank (1), **characterized by** a control means (11) for controlling the output of the heater (2) and a water level detector (10) providing a water level signal to said control means (11) for performing control.

2. The electric heat insulating pot of claim 1, **characterized in that** a temperature measuring device (2b) provides a measuring temperature signal to said control means (11) for controlling the output of the heater (2).

3. The electric heat insulating pot of claim 1 or 2, **characterized in that** said heater (2) is a light emitting heater having a power between 1 and 20 W.

4. The electric heat insulating pot of claim 2 or 3, **characterized in that** the control means (1) outputs the temperature, the heat level and the heater on-off condition on a display (16).

5. The electric heat insulating pot of one of claims 1 to 4, wherein the heater (2) is installed in the bottom part of the tank (1).

6. The electric heat insulating pot of one of claims 1 to 5, wherein the heater (2) is supplied with power from a battery inside said case (3).

7. The electric heat insulating pot of claim 6, wherein the battery is a lithium secondary battery, and the pot is portable.

8. The electric heat insulating pot of one of the claims 1 to 5, wherein the heater (2) is supplied with power from the outside via an electric line (13).

## Patentansprüche

1. Wärmeisolierender elektrischer Topf mit einem Tank (1), bei dem es sich um einen doppelwandigen Vakuumbehälter (1a, 1b) aus Glas handelt, der in einem Gehäuse (3) aufgenommen ist, welches den Tank (1) umgibt, einem Deckel (4), der eine obere Öffnung (3a) des Gehäuses (3) schließt, und einer in dem Tank (1) enthaltenen Niedrigenergie-Heizvorrichtung (2), **gekennzeichnet durch** eine Regeleinrichtung (11) zum Regeln der Ausgangsleistung der Heizvorrichtung (2) und einen Wasserstandsdetektor (10), der ein Wasserstandssignal an die Regeleinrichtung (11) zur Durchführung der Regelung liefert.

2. Wärmeisolierender elektrischer Topf nach Anspruch 1, **dadurch gekennzeichnet, daß** eine Temperaturmeßvorrichtung (2b) ein Temperaturmeßsignal an die Regelvorrichtung (1) zum Regeln der Ausgangsleistung der Heizvorrichtung (2) liefert.

3. Wärmeisolierender elektrischer Topf nach Anspruch 1 oder 2, **dadurch gekennzeichnet, daß** die Heizvorrichtung (2) eine lichtemittierende Heizvorrichtung mit einer Leistung zwischen 1 und 20 W ist.

4. Wärmeisolierender elektrischer Topf nach Anspruch 2 oder 3, **dadurch gekennzeichnet, daß** die Regeleinrichtung (1) die Temperatur, den Wärmegrad und den Ein- oder Ausschaltzustand der Heizvorrichtung an eine Anzeige (16) liefert.

5. Wärmeisolierender elektrischer Topf nach einem der Ansprüche 1 bis 4, **dadurch gekennzeichnet, daß** die Heizvorrichtung (2) im unteren Teil des Tanks (1) installiert ist.

6. Wärmeisolierender elektrischer Topf nach einem der Ansprüche 1 bis 5, **dadurch gekennzeichnet, daß** die Heizvorrichtung (2) durch eine Batterie in dem Gehäuse (3) mit Energie versorgt ist.

7. Wärmeisolierender elektrischer Topf nach Anspruch 6, **dadurch gekennzeichnet, daß** die Batterie eine sekundäre Lithium-Batterie und der Topf tragbar ist.

8. Wärmeisolierender elektrischer Topf nach einem der Ansprüche 1 bis 5, **dadurch gekennzeichnet, daß** die Heizvorrichtung über eine elektrische Leitung (13) von außen mit Energie versorgt ist.

## Revendications

1. Bouilloire électrique à isolation thermique comprenant un réservoir (1) qui est un récipient sous vide à double paroi en verre (1a, 1b) logé dans une enveloppe (3) qui enveloppe le réservoir (1), un couvercle (4) qui ferme une ouverture supérieure (3a) de l'enveloppe (3), et un petit dispositif de chauffage électrique (2) logé dans ledit réservoir (1), **caractérisé par** des moyens de commande (11) pour commander la sortie du dispositif de chauffage (2) et un détecteur de niveau d'eau (10) qui fournit un signal de niveau d'eau auxdits moyens de commande (11) pour réaliser la commande.

2. Bouilloire électrique à isolation thermique selon la revendication 1, **caractérisée en ce qu'**un dispositif de mesure de température (2b) fournit un signal de mesure de température auxdits moyens de commande (11) pour commander la sortie du dispositif de chauffage (1).

3. Bouilloire électrique à isolation thermique selon la revendication 1 ou 2, **caractérisée en ce que** ledit dispositif de chauffage (2) est un dispositif de chauffage à rayonnement lumineux ayant une puissance comprise entre 1 et 20 W.

4. Bouilloire électrique à isolation thermique selon la revendication 2 ou 3, **caractérisée en ce que** les moyens de commande (1) produisent la température, le niveau de chaleur et l'état marche - arrêt du dispositif de chauffage sur un écran (16).

5. Bouilloire électrique à isolation thermique selon les revendications 1 à 4, dans laquelle le dispositif de chauffage (2) est installée dans la partie inférieure du réservoir (1).

6. Bouilloire électrique à isolation thermique selon les revendications 1 à 5, dans laquelle le dispositif de chauffage (2) est alimenté avec de l'électricité provenant d'une pile située à l'intérieur de ladite enveloppe (3).

7. Bouilloire électrique à isolation thermique selon la revendication 6, dans laquelle la pile est une pile secondaire au lithium, et la bouilloire est portative.

8. Bouilloire électrique à isolation thermique selon les revendications 1 à 5, dans laquelle le dispositif de chauffage (2) est alimenté avec de l'électricité provenant l'extérieur via une ligne électrique (13).

# FIG. 1

# F I G. 2

# FIG. 3

FIG. 4

F I G. 5

(°C)
100
92
50
0

5    10    15    20

(hour)